# EUROPÄISCHE PATENTSCHRIFT

(11) **EP 1 708 951 B1**
(45) Veröffentlichungstag und Bekanntmachung des Hinweises auf die Patenterteilung: **02.07.2008**
(21) Anmeldenummer: 04802960.7
(22) Anmeldetag: 18.12.2004
(51) Int. Cl.: B66B 23/02, F16J 15/00, F16H 57/04

(54) **EINRICHTUNG ZUR ABDICHTUNG VON ROLLTREPPEN- ODER ROLLSTEIGANTRIEBEN**
DEVICE FOR SEALING ESCALATOR OR MOVING PAVEMENT DRIVES
SYSTEME POUR RENDRE ETANCHE LE MECANISME D'ENTRAINEMENT D'ESCALIERS OU DE TROTTOIRS ROULANTS

(30) Priorität: 20.01.2004 DE 102004002836
(43) Veröffentlichungstag der Anmeldung: 11.10.2006
(73) Patentinhaber: Kone Corporation, 00330 Helsinki (FI)
(72) Erfinder: THIEL, Alfred, 45549 Sprockhövel (DE)
(74) Vertreter: Döpp, Ludger
(86) Internationale Anmeldenummer: PCT/DE2004/002774
(87) Internationale Veröffentlichungsnummer: WO 2005/068339

(56) Entgegenhaltungen:
- WO-A-00/25047
- US-A- 4 437 673
- PATENT ABSTRACTS OF JAPAN Bd. 007, Nr. 183 (M-235), 12. August 1983 (1983-08-12) -& JP 58 084269 A (NISSAN JIDOSHA KK), 20. Mai 1983 (1983-05-20)

## Beschreibung

Die Erfindung betrifft eine Einrichtung zur dauerhaften Rückführung von durch Undichtigkeiten im Bereich von Dichtelementen eines Rolltreppen- oder Rollsteigantriebes hervorgerufenem Schmiermittel.

Antriebe für Rolltreppen und Rollsteige zeichnen sich durch geringe Umfangsgeschwindigkeiten aus, die darin begründet sind, dass die jeweilige Rolltreppe bzw. der jeweilige Rollsteig aus Sicherheitsgründen nur mit geringer Transportgeschwindigkeit betrieben werden darf. Vielfach werden hierbei am Abtrieb Umfangsgeschwindigkeiten von maximal 20 min⁻¹ erreicht. Zur Abdichtung gegen austretendes Schmiermittel kommen in der Regel dynamisch wirkende Dichtungen, wie beispielsweise Radialwellendichtringe, zum Einsatz. Es hat sich herausgestellt, dass derartige Dichtelemente häufig bereits nach zwei oder drei Jahren Betriebseinsatz ausfallen, wobei als Reparaturlösung vielfach geteilte Dichtelemente zum Einsatz gelangen, die mit den korrespondierenden Bauteilen verklebt werden. Jedoch auch diese Reparaturlösung versagt oft schon nach wenigen Tagen.

Durch die WO-A 00/25047 ist ein Dichtsystem für aus Motoren, insbesondere schnell laufende Motoren mit direkt angeflanschtem Getriebe gebildete Antriebseinheiten, insbesondere für Personenförderanlagen, wie Rolltreppen und Rollsteige, bekannt geworden, bestehend aus mindestens einem als Radialwellendichtung ausgebildeten Dichtelement, mindestens einem Schleuderelement sowie mindestens einem Deck- und Saugelement, wobei das Deck- und Saugelement getriebeseitig vor dem Dichtelement angeordnet ist. Dieses Dichtsystem soll für Motorabtriebswellen hoher Drehzahl (z.B. n = 1800 min⁻¹) eingesetzt werden, die im Bereich ihres freien Endes über ein Ritzel mit der ersten Stufe eines mehrstufigen Planetengetriebes in Wirkverbindung steht.

Der JP-A 58084269 ist ein Labyrinthdichtsystem zu entnehmen, bei welchem durch ein rotierendes Bauteil erzeugte Luft partiell über Kanäle in den Bereich des Labyrinths geführt wird, das als Barriere für austretendes Öl dient.

In der US-A 4,437,673 wird eine Dichteinrichtung beschrieben, bei welcher ein stationärer, mit einer elastischen Dichtlippe versehener Dichtkörper, eine Axialkraftkomponente ausübend, an einem Radialschenkel eines mit einer Welle umlaufenden Bauteiles anliegt.

Da Hersteller von Dichtelementen bis dato nicht in der Lage waren, entsprechende Lösungen zur Abdichtung derartiger langsam laufender Antriebe bereitzustellen, ist es das Ziel des Ertndungsgegenstandes, für Rolltreppen- oder Rollsteigantriebe eine Möglichkeit aufzuzeigen, wie dem dargelegten Problem dauerhaft begegnet werden kann.

Dieses Ziel wird erreicht durch eine Einrichtung zur dauerhaften Rückführung von durch Undichtigkeit im Bereich von Dichtelementen eines Rolltreppen- oder Rollsteigantriebes hervorgerufenem Schmiermittel, beinhaltend eine mit geringer Umfangsgeschwindigkeit, insbesondere um eine Horizontalachse, rotierende Welle, mindestens ein Dichtelement, mindestens ein, in Leckagerichtung gesehen hinter dem Dichtelement angeordnetes Förderelement sowie mindestens ein mit dem Förderelement zusammenwirkendes Rückführelement für das Schmiermittel, in den dem Dichtelement vorgelagerten Bereich, wobei das Rückführelement durch mindestens eine Hülse gebildet ist, die mindestens ein mit dem Förderelement in Wirkverbindung stehendes Abstreifelement aufweist.

Vorteilhafte Weiterbildungen des Erfindungsgegenstandes sind den Unteransprüchen zu entnehmen.

Die aufgezeigte Lösung bildet sowohl ein dichtelementunabhängiges, als auch ein vom Schmiermitteltyp unabhängiges System zur dauerhaften Rückführung von durch Undichtigkeit hervorgerufenem Schmiermittel in den Bereich des Schmiermittelraumes. Als problematisch hat sich herausgestellt, Radialwellendichtringe zur Abdichtung von synthetischem Schmierstoff, beispielsweise auf Polyglykolbasis einzusetzen, da Polyglykole hinsichtlich einer zuverlässigen Abdichtung als ungünstige Schmierstoffe anzusehen sind. NBR gilt zwar als geeigneter, aber nicht als gut oder gar sehr gut geeigneter Werkstoff für Dichtzwecke. HNBR soll hier etwas günstiger sein als NBR. Da es herstellerseitig derzeit keine Werkstoffe gibt, die insbesondere zur wirksamen Abdichtung, Abdichtung, beispielsweise von Polyglykoischmierstoffen, geeignet sind, stellt das erfindungsgemäße System eine sinnvolle Alternative dar, wie auftretende Leckagen dauerhaft gehandhabt werden können.

Da die aufgezeigte Lösung auch bei größerer Beschädigung des Dichtelementes noch sinnvoll einsetzbar ist, wird der Zeitpunkt eines möglichen Austausches des Dichtelementes nach hinten verlagert, wodurch die Standzeit des Rolltreppen- oder Rollsteigantriebes beträchtlich erhöht werden kann. Reparaturmaßnahmen sind entweder gar nicht oder eher selten gegeben, wobei bedarfsweise bei eventuellem Verschleiß lediglich die Hülse auszutauschen ist, sofern der Keil einem größeren Verschleiß unterliegen sollte und nicht mehr mit vorgebbarer Anpresskraft am Förderelement anliegt, um einen entsprechenden Abstreifeffekt zu bewirken.

Der Keil liegt zunächst mir vorgebbarer Anpresskraft an der gegenüberliegenden Stirnfläche des Förderelementes an. Lässt die Vorspannkraft durch Abrieb nach, so können Mikrospalte zwischen Keil und Förderelement entstehen. Selbige führen jedoch nicht zwangsläufig zum Austausch der Hülse, da das Schmiermittel in der Regel zähflüssig ist und somit als dickerer Film auf dem Förderelement gegeben ist, der dennoch abgestreift werden kann.

Durch den Erfindungsgegenstand wird somit - unabhängig von tatsächlich gegebenen Leckagen - ein nach außen hin dichtes System gebildet. Sofern für den problematischen synthetischen Schmierstoff die Werkstoffe auf Basis von NBR oder HNBR nicht als ausreichend angesehen werden, können beispielsweise Dichtelemente auf Basis von PTFE oder PTFE-Compounds eingesetzt werden, da selbige geringere Verträglichkeitsprobleme mit synthetischen Schmiermitteln aufweisen.

Der Erfindungsgegenstand ist anhand eines Ausführungsbeispiels in der Zeichnung dargestellt und wird wie folgt beschrieben. Es zeigen:
- Figur 1: Teildarstellung eines Antriebes für eine Rolltreppe oder einen Rollsteig;
- Figur 2: Prinzipskizze des abzudichtenden Wellenbereiches für den in Figur 1 dargestellten Antrieb;
- Figur 3: Darstellung des Rückführelementes gemäß Figur 2 in verschiedenen Ansichten.

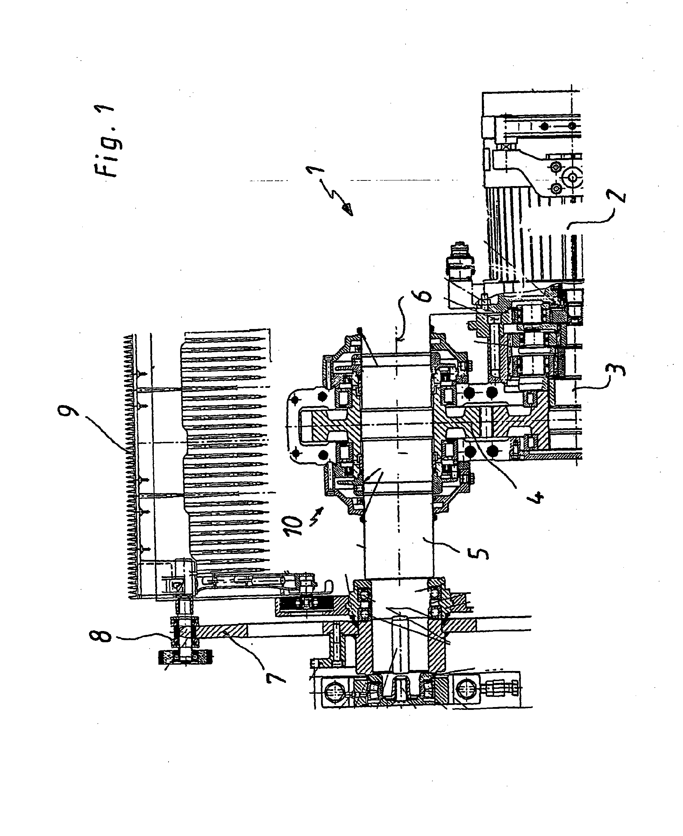

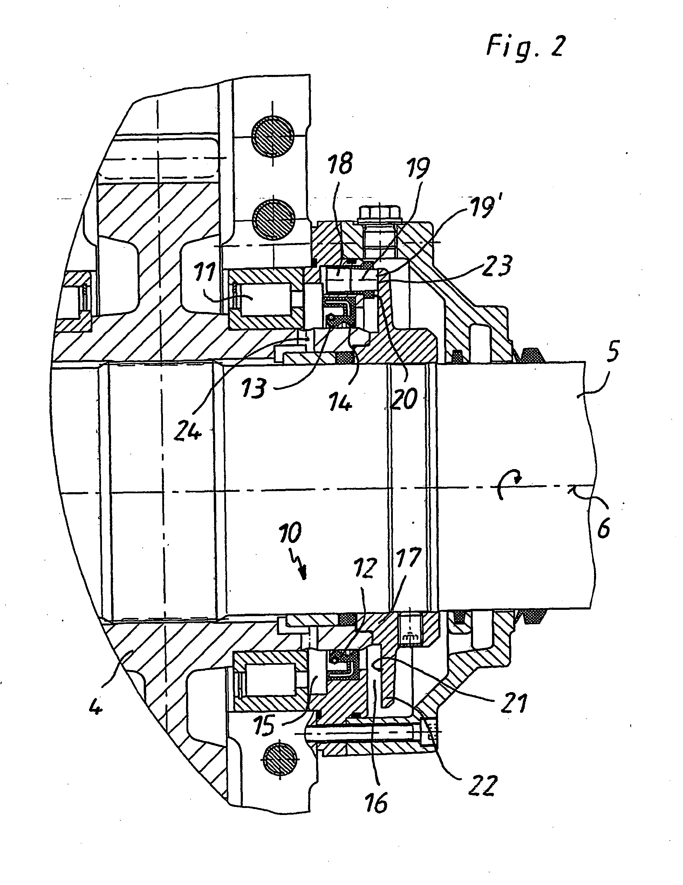

Figur 1 zeigt einen Ausschnitt aus einem Antrieb 1, einsetzbar für eine Rolltreppe oder einen Rollsteig. Erkennbar ist ein Antriebsmotor 2, ein Getriebe 3 sowie eine Untersetzungsstufe 4 zur Herabsetzung der Umfangsgeschwindigkeit der Antriebswelle 5, die um eine Horizontalachse 6 drehbar ist. Ferner erkennbar ist ein Kettenrad 7 zur Umlenkung der mit Antriebsmitteln 8 zusammenwirkenden Stufen oder Paletten 9 der nicht weiter dargestellten Rolltreppe bzw. des nicht weiter dargestellten Rollsteiges. Der abzudichtende Bereich ist mit dem Bezugszeichen 10 versehen und wird in Figur 2 näher beschrieben.

Figur 2 zeigt den abzudichtenden Bereich 10 gemäß Figur 1. Erkennbar ist die Untersetzungsstufe 4, die Antriebswelle 5 und die Horizontalachse 6. Ferner erkennbar ist ein Lager 11, ein in diesem Beispiel als Radialwellendichtring ausgebildetes Dichtelement 12 mit einer Hauptdichtlippe 13 und einer Sekundärdichtlippe 14. Der Schmiermittelraum ist mit dem Bezugszeichen 15 versehen. Zur Schmierung einerseits der Untersetzungsstufe 4 und andererseits des Lagers 11 ist der Raum 15 mit Schmiermittel, in diesem Beispiel einem synthetischen Schmiermittel, gefüllt. Hier kann natürlich jedes andersartige Schmiermittel ebenfalls zum Einsatz gelangen. Gleiches gilt für das Dichtelement 12, das auch eine Gleitring- oder eine Labyrinthdichtung sein kann. Bei Undichtigkeit der Hauptdichtlippe 13 sowie der Sekundärdichtlippe 14 gelangt Schmiermittel in den Leckagebereich 16 und würde, über einen verhältnismäßig kurzen Zeitraum gesehen, austreten und zur Verschmutzungen der in Figur 1 dargestellten Stufen oder Paletten 9 führen, was einen ständigen Reinigungsbedarf mit sich bringen würde. Um dies zu vermeiden, kommt eine Einrichtung zur dauerhaften Rückführung von durch diese Undichtigkeit im Bereich des Dichtelementes 12 hervorgerufenem Schmiermittel zum Einsatz, die im folgenden näher beschrieben wird. Dem Dichtelement 12 nachgeordnet ist ein in diesem Beispiel als Scheibe ausgebildetes Förderelement 17, das fest mit der Welle 5 verbunden ist und somit mit selbiger umläuft. Radial außerhalb des Dichtelementes 12 ist ein als Hülse ausgebildetes Rückführelement 18 vorgesehen, das mit einem keilförmig ausgebildeten Abstreifelement 19 versehen ist. Das Abstreifelement 19 steht über die dem Förderelement 17 zugeordnete Begrenzungskante 20 vor und liegt zunächst mit vorgebbarer Anpresskraft an der gegenüberliegenden Stirnfläche 21 des Förderelementes 17 an. Sobald der Bereich 16 mit durchgetretenem Schmiermittel so weit aufgefüllt ist, dass der Radialschenkel 22 des Förderelementes 17 darin eintaucht, wird das Schmiermittel in Umfangsrichtung mitgenommen und im Bereich des Abstreifelementes 19 von der Stirnfläche 21 abgeschabt, wobei es über eine Ablaufschräge 23 der Hülse 18 in den Bereich 24 vor dem Dichtelement 12 zurückgeführt wird. Durch diese Maßnahme können auch größere Undichtigkeiten des Dichtelementes 12 über eine lange Zeit in Kauf genommen werden, ohne dass Reparaturmaßnahmen notwendig sind. Die Standzeit des Antriebes 1 gemäß Figur 1 kann somit beträchtlich erhöht werden. Bei sich einstellendem Verschleiß der Abstreifkante 19' des Abstreifelementes 19 werden Mikrospalte gebildet. Bedingt durch die Zähflüssigkeit des Schmiermittels ist der am Förderelement 17 anhaftende Schmiermittelfilm dicker als die Mikrospalte, so dass - trotz Verschleiß - dennoch eine gute Abstreifwirkung realisierbar ist.

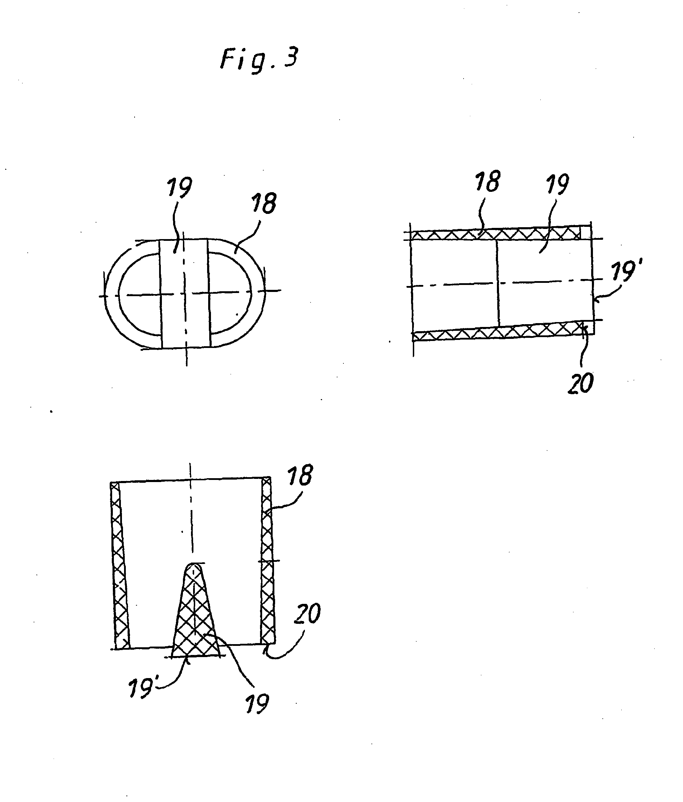

Figur 3 zeigt in verschiedenen Ansichten die Hülse 18 in Verbindung mit dem keilförmig ausgebildeten Abstreifelement 19. Die Abstreifkante 19' steht um eine vorgebbare Länge über die Begrenzungskante 20 der Hülse 18 vor.

## Patentansprüche

1. Einrichtung zur dauerhaften Rückführung von durch Undichtigkeit im Bereich von Dichtelementen (12) eines Rolltreppen- oder Rollsteigantriebes (1) hervorgerufenem Schmiermittel, beinhaltend eine mit geringer Umfangsgeschwindigkeit, insbesondere um eine Horizontalachse (6), rotierende Welle (5), mindestens ein Dichtelement (12), mindestens ein, in Leckagerichtung gesehen hinter dem Dichtelement (12) angeordnetes Förderelement (17) sowie mindestens ein mit dem Förderelement (17) zusammenwirkendes Rückführelement (18) für das Schmiermittel, in den dem Dichtelement (12) vorgelagerten Bereich (24), wobei das Rückführelement (18) durch mindestens eine Hülse gebildet ist, die mindestens ein mit dem Förderelement (17) in Wirkverbindung stehendes Abstreifelement (19) aufweist.

2. Einrichtung nach Anspruch 1, **dadurch gekennzeichnet, dass** das Dichtelement (12) ein mit mindestens einer Dichtlippe (13,14) versehener dynamisch wirkender Radialwellendichtring, insbesondere auf Basis von NBR, HNBR oder PTFE, ist.

3. Einrichtung nach Anspruch 1 oder 2, **dadurch gekennzeichnet, dass** das Schmiermittel ein synthetischer Schmierstoff ist.

4. Einrichtung nach einem der Ansprüche 1 bis 3, **dadurch gekennzeichnet, dass** das Förderelement (17) durch eine mit der Welle (5) umlaufende Scheibe gebildet ist, die anhaftendes Schmiermittel aus einem Leckagebereich (16) in den Bereich des Rückführelementes (18) transportiert.

5. Einrichtung nach einem der Ansprüche 1 bis 4, **dadurch gekennzeichnet, dass** das Abstreifelement (19) über die förderelementseitig vorgesehene Begrenzungskante (20) der Hülse (18) vorsteht, wobei die Abstreifkante (19') mit vorgebbarer Anpresskraft an der gegenüberliegenden Stirnfläche (21) des Förderelementes (17) anliegt.

6. Einrichtung nach einem der Ansprüche 1 bis 5, **dadurch gekennzeichnet, dass** die Hülse (18) aus einem schmiermittelresistentem Werkstoff besteht.

7. Einrichtung nach einem der Ansprüche 1 bis 6, **dadurch gekennzeichnet, dass** die Hülse (18) radial außerhalb des Dichtelementes (12) vorgesehen ist und die Abstreifkante (19') des Abstreifelementes (19) im Bereich des äußeren Durchmessers des Förderelementes (17) an der zugeordneten Stirnfläche (21) desselben anliegt.

8. Einrichtung nach einem der Ansprüche 1 bis 7, **dadurch gekennzeichnet, dass** die axiale Länge der Hülse (18) in etwa der axialen Baulänge des Dichtelementes (12) entspricht, wobei die Hülse (18) dichtelementseitig mit einer in Richtung des Dichtelementes (12) weisenden Ablaufschräge (23) für das zurückgeführte Schmiermittel versehen ist.

## Claims

1. A device for the permanent recirculation of lubricant escaping from leakages of seal elements (12) of an escalator or moving pavement drive (1), comprising a shaft (5) rotating with low circumferential speed in particular around a horizontal axis (6), at least one seal element (12), at least one conveyor element (17) located downstream said seal element (12), seen in the direction of leakage, as well as at least one recirculation element (18) cooperating with said conveyor element (17) for recirculating the lubricant into the area (24) upstream the seal element (12), wherein the recirculation element (18) is formed by at least one sleeve that comprises at least one stripping element (19) actively related to the conveyor element (17).

2. A device according to claim 1, **characterized in that** the seal element (12) is a dynamically acting rotary shaft seal in particular on the base of NBR, HNBR or PTFE provided with at least one sealing lip (13, 14).

3. A device according to claim 1 or 2, **characterized in that** the lubricant is a synthetic lubricant.

4. A device according to one of the claims 1 through 3, **characterized in that** the conveyor element (17) is formed by a disk rotating with the shaft (5), which transports adhering lubricant from a leakage area (16) towards the recirculation element (18).

5. A device according to one of the claims 1 through 4, **characterized in that** the stripping element (19) projects over the limiting edge (20) of said sleeve (18) on the side of the conveyor element, wherein the stripping edge (19') sits close with predetermined contact pressure on the opposite face (21) of the conveyor element (17).

6. A device according to one of the claims 1 through 5, **characterized in that** the sleeve (18) is made of a material resistant to lubricant.

7. A device according to one of the claims 1 through 6, **characterized in that** the sleeve (18) is provided radially outside the seal element (12) and the stripping edge (19') of said stripping element (19) sits close on the associated face (21) of the conveyor element (17) in the region of the outer diameter thereof.

8. A device according to one of the claims 1 through 7, **characterized in that** the axial length of the sleeve (18) approximately corresponds to the axial construction length of the seal element (12), wherein the sleeve (18), on the side of the seal element, is provided with a discharge slope (23) for the returned lubricant that points into the direction of said seal element (12).

## Revendications

1. Dispositif de remise permanente en circulation de lubrifiant qui sort des inétanchéités au niveau des éléments d'étanchéité (12) d'un mécanisme d'entraînement d'un escalier ou d'un trottoir roulant (1), comprenant un arbre (5) tournant avec une vitesse circonférentielle faible notamment autour d'un axe horizontal (6), au moins un élément d'étanchéité (12), au moins un élément convoyeur (17) disposé en aval de l'élément d'étanchéité (12), vu dans la direction de fuite, ainsi qu'au moins un élément de remise en circulation (18) coopérant avec l'élément convoyeur (17) et destiné à recycler le lubrifiant dans la zone (24) en amont de l'élément d'étanchéité (12), l'élément de remise en circulation (18) étant formé par au moins un manchon qui comprend au moins un élément de stripage (19) activement relié à l'élément convoyeur (17).

2. Dispositif selon la revendication 1, **caractérisé en ce que** l'élément d'étanchéité (12) est une bague à lèvres avec ressort agissant dynamiquement et prévue d'au moins une lèvre d'étanchéité, notamment sur la base de NBR, HNBR ou PTFE.

3. Dispositif selon I revendication 1 ou 2, **caractérisé en ce que** le lubrifiant est un lubrifiant synthétique.

4. Dispositif selon l'une des revendications 1 à 3, **caractérisé en ce que** l'élément convoyeur (17) est formé par une disque tournant avec l'arbre (5) et transportant du lubrifiant adhérant d'une zone de fuite (16) vers la zone de l'élément de remise en circulation (18).

5. Dispositif selon l'une des revendications 1 à 4, **caractérisé en ce que** l'élément de stripage (19) dépasse le bord de limitation (20) du manchon (18) prévu du côté de l'élément convoyeur, le bord de stripage (19') restant avec une force de pression prédéterminée contre la face opposée (21) de l'élément convoyeur (17).

6. Dispositif selon l'une des revendications 1 à 5, **caractérisé en ce que** le manchon (18) est composé d'une matière résistante au lubrifiant.

7. Dispositif selon l'une des revendications 1 à 6, **caractérisé en ce que** le manchon (18) est prévu radialement à l'extérieur de l'élément d'étanchéité (12) et le bord de stripage (19') de l'élément de stripage (19) reste contre la face associée (21) de l'élément convoyeur (17) au niveau du diamètre extérieur de celui-ci.

8. Dispositif selon l'une des revendications 1 à 7, **caractérisé en ce que** la longueur axiale du manchon (18) correspond environ à la longueur de construction axiale de l'élément d'étanchéité (12), le manchon (18) étant prévu, du côté de l'élément d'étanchéité, d'une déclivité d'écoulement (23) du lubrifiant recyclé qui montre dans la direction de l'élément d'étanchéité (12).
